# EUROPÄISCHE PATENTSCHRIFT

(11) **EP 1 971 762 B1**
(45) Veröffentlichungstag und Bekanntmachung des Hinweises auf die Patenterteilung: **29.04.2009**
(21) Anmeldenummer: 06829629.2
(22) Anmeldetag: 14.12.2006
(51) Int. Cl.: F02B 75/06, F02B 65/00

(54) **STEUERKETTENTRIEB MIT INTEGRIERTEM ELEKTROMOTOR**
TIMING CHAIN DRIVE COMPRISING AN INTEGRATED ELECTRIC MOTOR
SYSTEME DE CHAINE DE DISTRIBUTION A MOTEUR ELECTRIQUE INTEGRE

(30) Priorität: 10.01.2006 DE 102006001258
(43) Veröffentlichungstag der Anmeldung: 24.09.2008
(73) Patentinhaber: iwis motorsysteme GmbH & Co. KG, 81369 München (DE); Compact Dynamics GmbH, 82319 Starnberg (DE)
(72) Erfinder: HIRSCHMANN, Volker, 82256 Fürstenfeldbruck (DE); SCHACHTNER, Bernhard, 84381 Johanniskirchen (DE); FINK, Thomas, D-85221 Dachau (DE); RASCH, Reinhard, D-82229 Hechendorf (DE); HOFFMANN, Bernhard, D-82319 Starnberg (DE); GRÜNDL, Andreas, 82319 Starnberg (DE)
(74) Vertreter: Grünecker, Kinkeldey, Stockmair & Schwanhäusser Anwaltssozietät
(86) Internationale Anmeldenummer: PCT/EP2006/012079
(87) Internationale Veröffentlichungsnummer: WO 2007/079901

(56) Entgegenhaltungen:
- DE-A1- 19 532 164
- DE-A1- 19 549 259
- JP-A- 1 190 922
- JP-A- 63 212 723

## Beschreibung

Die vorliegende Erfindung betrifft einen Steuertrieb für einen Verbrennungsmotor, mit einer Kurbelwelle, mindestens einer Nockenwelle, einem mit der Kurbelwelle verbundenen Abtriebsrad, mindestens einem, die zugehörigen Nockenwelle antreibenden Antriebsrad und einem, das Abtriebsrad und das mindestens eine Antriebsrad miteinander verbindenden Getriebe.

Insbesondere im vergangenen Jahrzehnt wurden zahlreiche Maßnahmen ergriffen, Verbrennungsmotoren hinsichtlich ihres Laufverhaltens ruhiger auszugestalten. Auch Steuertriebe sollen ruhig und möglichst geräuscharm laufen. Sofern flexible Umschlingungsmittel, wie Ketten und Riemen bei Steuertrieben eingesetzt werden, sind spezielle Spanneinrichtungen und Führungsmittel vorgesehen, um einen möglichst ruhigen Lauf des Steuertriebes zu verwirklichen. Bei der Verwendung von Steuerketten ist auch eine Tendenz in Richtung von Zahnketten zu erkennen, da diese nochmals zu einer Geräuschereduzierung beitragen. Bei dem das Abtriebsrad der Kurbelwelle und das Antriebsrad der Kurbelwelle oder die Antriebsräder der Kurbelwellen miteinander verbindende Getriebe kann es sich um ein Riemen-, Ketten- oder Zahnradgetriebe oder eine Mischform dieser Konstruktionsvarianten handeln.

Es ist die Aufgabe der vorliegenden Erfindung, einen Steuertrieb der eingangs genannten Art neueren Entwicklungsmöglichkeiten zugänglich zu machen und trotzdem die Dauerhaltbarkeit im Normalbetrieb zu verbessern.

Diese Aufgabe wird erfindungsgemäß dadurch gelöst, dass ein Elektromotor vorgesehen ist, der versetzt von der Kurbelwelle und der mindestens einen Nockenwelle sowie versetzt zu dem zugehörigen Abtriebsrad und zugehörigen mindestens einem Antriebsrad mittels eines Zwischenrades mit dem Getriebe in Eingriff steht, und dass eine Steuereinrichtung vorgesehen ist, wobei der Elektromotor von der Steuereinrichtung derart ansteuerbar ist, dass auf der Basis mindestens eines Betriebsparameters und/oder mindestens einer Betriebssituation des Getriebes ein zusätzliches Drehmoment und/oder Drehmomentprofil in das Getriebe einbringbar und/oder vom Getriebe abgreifbar ist. Aufgrund der Anordnung und dem Eingriff des Zwischenrades kann auch davon gesprochen werden, dass der Elektromotor in das Getriebe integriert ist. Das Getriebe ist demnach ohne Kurbelwelle, Abtriebsrad sowie Nockenwelle(n) und Antriebsrad oder -räder definiert. Das bedeutet, dass der mindestens eine Betriebsparameter oder die mindestens eine Betriebssituation den Zustand bzw. die Situation des Getriebes widerspiegelt. Im Gegensatz hierzu sind Maßnahmen, die die Drehungleichförmigkeit der Kurbelwelle ausgleichen sollen, bestens bekannt. Wenn diese Ungleichförmigkeiten auch auf das Getriebe übertragen werden, so sind die Auswirkungen innerhalb des Getriebes doch ganz andere als an der Kurbelwelle selbst. Stellt man sich vereinfacht den Steuertrieb mit Kurbelwelle und mindestens einer Nockenwelle als große Masse (Kurbelwelle), kleine Masse (Kurbelwelle(n)) und das Getriebe als diese miteinander verbindende Feder vor, so ist leicht zu erkennen, dass die Zustände im Federsystem ganz andere sind, als bei den beiden Massen. Maßnahmen, die an die Nockenwelle angreifen, sind ebenfalls bekannt. Exemplarisch seien hier die DE 442577 A1, DE 19532129 A1, DE 19939605 A1 und JP 2002-309961 A genannt. Die bekannten Maßnahmen lassen jedoch die Betriebssituation und Betriebszustände des Getriebes außen vor und ein gezielter Eingriff in Getriebe mittels des Elektromotors ist in Abhängigkeit dieser Betriebszustände bislang unbekannt. Der zusätzliche Elektromotor nimmt somit direkten Einfluss auf den Steuertrieb, indem er mit dem Getriebe in Eingriff steht. Sowohl durch Einbringen als auch durch Abgreifen eines Drehmoments ändert der Elektromotor das Schwingungssystem "Getriebe", wodurch er aufgrund des gesteuerten Eingriffs über die Steuereinrichtung gezielt Einfluss auf dieses dynamische System nimmt. Der unmittelbare Eingriff in das Getriebe erscheint erst einmal nachteilig; jedoch geschieht dies versetzt zu der Kurbelwelle und zu der Nockenwelle oder den Nockenwellen, so dass der Elektromotor nur indirekt über das mit diesen im Eingriff stehende Getriebe Einfluss auf die Kurbelwelle und die Nockenwelle oder Nockenwellen nimmt. Ein Teil des Getriebes liegt somit als Pufferglied zwischen der Kurbelwelle und der Nockenwelle oder den Nockenwellen.

Des Weiteren kann eine Erfassungs- und/oder Auswerteeinrichtung vorgesehen sein, mittels der der mindestens eine Betriebsparameter und/oder die mindestens eine Betriebssituation des Getriebes erfassbar und/oder auswertbar ist, wobei als ein Betriebsparameter der Schwingungszustand des Getriebes und/oder als eine Betriebssituation die Schwingungssituation des Getriebes erfasst und/oder ausgewertet ist oder sind.

Hierdurch lassen sich die im Getriebe auftretenden Schwingungen durch gegengerichtete Schwingungsanregung reduzieren und eine Ausbildung von Resonanzen verhindern. Hierzu können Größen unmittelbar erfasst oder aufgrund des bekannten Verhaltens, z.B. mittels des Motorkennfeldes, ausgewertet werden. Auftretende Resonanzen des Getriebes sind vorab bekannt. Des Weiteren lässt sich durch diese Funktion gegebenenfalls ein Down-Sizing der Steuertriebeskomponenten herbeiführen.

Besonders vorteilhaft wirkt sich die Erfindung gemäß einer Variante bei Getrieben mit flexiblen Umschlingungsmitteln aus. Bei einer Variante weist hierzu das Getriebe mindestens eine Steuerkette auf. Steuerketten neigen sehr leicht zum Schwingen, weshalb geeignete Maßnahmen durch Einbringen und Abgreifen von Drehmomenten hier eine gute Verbesserung bringen.

Des Weiteren kann das Zwischenrad mit der mindestens einen Steuerkette in Eingriff stehen. Der Motor ist somit unmittelbar an die Steuerkette angekoppelt.

Zum Einsatz können Steuerkettentriebe kommen, bei denen das Kurbelwellenkettenrad über eine Einfach- oder Duplexsteuerkette unmittelbar mit dem Nockenrad oder den Nockenrädern verbunden wird. Andere Konstruktionsvarianten sehen vor, dass eine erste Steuerkette mit einem Zwischenwellenkettenrad verbunden ist, das zwei Zahnkränze aufweist. Der zweite, nicht mit der ersten Steuerkette in Eingriff stehende Zahnkranz treibt eine zweite Steuerkette an, die um das Nockenwellenrad oder die Nockenwellenräder herumgeführt ist. Bei einer solchen Ausgestaltung können auch unterschiedliche Teilungen der Steuerketten zur Anwendung kommen. Darüber hinaus kann eine Übersetzung geschaffen werden, die zu günstigeren Verhältnissen zwischen Kurbelwellenkettenrad und Nockenwellenkettenrad bzw. -kettenrädern führt. Die Zwischenwelle kann auch zum Antreiben eines Hilfsaggregates verwendet werden.

Gemäß einer Konstruktionsvariante ist eine Zwischenwelle vorgesehen, die mittels einer ersten Steuerkette mit der Kurbelwelle und mittels einer zweiten Steuerkette mit der mindestens einen Nockenwelle wirkverbunden ist, wobei der Elektromotor unmittelbar mit der Zwischenwelle in Eingriff steht. Die Zwischenwelle könnte darüber hinaus auch zum Antreiben eines Nebenaggregats, z.B. einer Hochdruckpumpe, herangezogen werden. Durch diese Variante ist auch eine Übersetzung zwischen dem Kurbelwellenkettenrad und dem Nockenwellenkettenrad oder den Nockenwellenkettenrädem möglich. Hierdurch lassen sich die Zähnezahlen der einzelnen Kettenräder optimieren. Durch die relativ kurzen Kettenstränge bis zum Zwischenwellenkettenrad kann der Elektromotor auch einen günstigeren Einfluss durch das Einbringen und/oder Abgreifen eines Drehmomentes auf das Gesamtverhalten des Steuerkettentriebes nehmen.

Bevorzugt kann dabei eine Rotorwelle des Elektromotors als Zwischenwelle ausgebildet oder koaxial mit dieser verbunden sein, wodurch sich eine sehr kompakte Anordnung im Bereich der Zwischenwelle ergibt. Die Anordnung an der Zwischenwelle hat darüber hinaus den Vorteil, dass der Elektromotor versetzt neben dem eigentlichen Motorblock angeordnet werden kann, so dass lediglich die Rotorwelle des Elektromotors in den mit Öl gefüllten Steuerkettenschacht bzw. -raum hineingeführt wird. Der Elektromotor lässt sich derart leicht gegenüber dem den Steuerkettentrieb benetzenden Öl abdichten, weil nur der in den Ölraum eingreifende Rotorstumpf abgedichtet werden muss. Der gesamte Stator des Elektromotors kann außerhalb des Ölraums platziert werden. Der Stator kann sich somit neben dem Motorblock erstrecken, weshalb der Verbrennungsmotor gegenüber vergleichbaren Verbrennungsmotoren ohne Elektromotor nicht länger sein muss.

Des Weiteren kann die Steuereinrichtung als Regeleinrichtung ausgestaltet sein und der Elektromotor von der Regeleinrichtung derart regelbar sein, dass mittels des Elektromotors ein zusätzliches Drehmoment und/oder Drehmomentprofil geregelt in das Getriebe einbringbar und/oder vom Getriebe abgreifbar ist. Es soll sich demnach um einen geschlossenen Regelkreis handeln, was das Abgreifen von Regelgrößen erfordert, so dass sich das zusätzliche Drehmoment und/oder Drehmomentprofil im Rahmen eines Regelkreises nachregeln lässt. Je nach Zeitverzögerung des Regelkreises ergibt sich somit eine im Wesentlichen unmittelbare Anpassung an die jeweiligen Betriebsbedingungen.

Hierzu kann weiter vorgesehen sein, dass die Regeleinrichtung mit einer Sensoreinrichtung verbunden ist, mittels der mindestens ein von einem Betriebsparameter und/oder einer Betriebssituation des Getriebes abhängiges Signal erfassbar ist und an die Regeleinrichtung weiterleitbar ist, wobei der Elektromotor mittels der Regeleinrichtung derart regelbar ist, dass mittels des Elektromotors in Abhängigkeit des Betriebsparameters und/oder der Betriebssituation ein zusätzliches Drehmoment und/oder Drehmomentprofil in das Getriebe einbringbar und/oder vom Getriebe abgreifbar ist. Hier besteht also die Möglichkeit, einen oder mehrere, auf den Steuerkettentrieb Einfluss nehmende Größen zu erfassen und in die Regelung für den Elektromotor mit einfließen zu lassen. Günstigerweise werden die Betriebsparameter während des Betriebs des Verbrennungsmotors und nicht Stillstandsgrößen ermittelt.

Bei einer weiteren Ausgestaltung ist der Elektromotor als Starter für den Verbrennungsmotor ausgebildet. Das Starten erfolgt demnach über das Getriebe Aufgrund der großen Robustheit, z.B. einer Steuerkette, ist es ohne weiteres möglich und vermeidet somit zusätzliche konstruktiven Aufwand.

Des Weiteren bezieht sich die Erfindung auf ein Verfahren zum Betreiben eines Steuertriebs an einem Verbrennungsmotor, bei dem ein Elektromotor versetzt und separat von der Kurbelwelle und mindestens einer Nockenwelle sowie versetzt zum zugehörigen Antriebsrad und zugehörigen mindestens einen Abtriebsrad in ein das Antriebsrad und das mindestens eine Abtriebsrad miteinander verbindendes Getriebe integriert ist, und mittels einer Steuereinrichtung derart ansteuerbar ist, dass mittels des Elektromotors ein zusätzliches Drehmoment und/oder Drehmomentprofil in das Getriebe einbringbar und/oder vom Getriebe abgreifbar ist Das Verfahren umfasst folgende Schritte:
Erfassen mindestens eines Betriebsparameters und/oder einer Betriebssituation des Getriebes,
Ansteuern des Elektromotors mittels der Steuereinrichtung, um ein zusätzliches Drehmoment und/oder Drehmomentprofil in Abhängigkeit des mindestens einen Betriebsparameters und/oder der Betriebssituation in das Getriebe einzubringen und/oder vom Getriebe abzugreifen.

Ein solches Verfahren eröffnet vielfältige Möglichkeiten zur Verbesserung eines Steuertriebes. Zum Beispiel können die im Steuertrieb auftretenden Schwingungen durch gegengerichtete Schwingungsanregung mittels des Elektromotors reduziert und die Ausbildung von Resonanzen verhindert werden. Nachdem Schwingungen bei der Auslegung der Steuertriebskomponenten eine wichtige Rolle spielen, können auch Downsizing-Maßnahmen durchgeführt werden, die zu einer Verbilligung dieses Serien produktes führen. Darüber hinaus lässt sich aufgrund reduzierter Schwingungen auch das Nocken-Ventilhub(NVH)Verhalten verbessern, wodurch sich auch außerhalb des Steuertriebs Verbesserungen ergeben.

Des Weiteren kann mindestens ein auf die im Getriebe auftretenden Schwingungen schließender Betriebsparameter und/oder als Betriebssituation die Schwingungssituation des Getriebes erfasst und/oder ausgewertet werden und die Steuereinrichtung den Elektromotor ansteuern, um ein zusätzliches Drehmoment und/oder Drehmomentprofil in Abhängigkeit des mindestens einen Betriebsparameters und/oder der Betriebssituation zur Schwingungsdämpfung in das Getriebe einzubringen und/oder vom Getriebe abzugreifen. Ein solcher Betriesparameter lässt demnach direkt oder indirekt auf den Schwingungszustand des Steuertriebs schließen. Die Vorteile, die sich aufgrund dieser Verfahrensvariante ergeben, sind oben bereits erläutert.

Des Weiteren kann der Elektromotor mittels des Steuertriebs den Verbrennungsmotor starten. Hierbei wird ein Drehmoment in den Steuertrieb eingebracht. Im Gegensatz zu den meist verwendeten Startern, steht dieser Starter mittels des Steuertriebs immer mit dem Verbrennungsmotor in Verbindung (kein Aus- und Einkoppeln), wodurch sich ein geringerer Verschleiß des Starters ergibt. Durch die gegebenenfalls vielfältigen anderen Funktionen des Elektromotors ist das ständige Mitlaufen desselben nicht von Nachteil.

Darüber hinaus besteht gemäß einer Variante auch die Möglichkeit, dass der Elektromotor während vorbestimmter Betriebssituationen des Steuertriebs im Generatorbetrieb betrieben wird und Energie abgibt. Diese Energie lässt sich dann z.B. in das Bordnetz des Kraftfahrzeuges einspeisen. Gegebenenfalls lassen sich auch Batterien und Speicher laden. Als Betriebssituation kommen Leerlaufsituationen oder Bremssituationen des Verbrennungsmotors in Frage. Zusätzlich kann auch der Gesamtwirkungsgrad durch bessere Auslastung des Motors eventuell auch zusätzliche Speicherung erhöht werden.

Eine weitere Verfahrensvariante sieht vor, dass der Elektromotor während vorbestimmter Betriebssituationen des Steuertriebs mittels des Steuertriebs eine Drehmomentunterstützung des Verbrennungsmotors bewirkt. Die Drehmomentunterstützung kann auch so stark sein, dass von einer Boostfunktion geredet werden kann. Dies kann insbesondere dann geschehen, wenn die vorbestimmte Betriebssituation ein das Getriebe des Steuertriebs übertragenes Turboloch des Verbrennungsmotors ist. Das Ansprechverhalten des Verbrennungsmotors lässt sich hierdurch verbessern.

Eine solche Drehmomentunterstützung kann aber auch erfolgen, wenn die vorbestimmte Betriebssituation eine auf das Getriebe des Steuertriebs übertragene Abwürgsituation des Verbrennungsmotors ist. Insbesondere beim Anfahren und/oder Abbremsen des Kraftfahrzeuges wird hierdurch ein sinnvoller Vorteil erzielt, weil der Elektromotor unterstützend eingreift.

Eine Verfahrensvariante sieht vor, dass die Steuereinrichtung als Regeleinrichtung ausgestaltet ist, um das zusätzliche Drehmoment und/oder Drehmomentprofil in Abhängigkeit des mindestens einen Betriebsparameters geregelt in das Getriebe einzubringen und/oder vom Getriebe abzugreifen. Die gesamte Steuerung des Elektromotors erfolgt somit innerhalb eines Regelkreises, so dass ein ständiges Abfragen und Nachregeln zur Anpassung an die Betriebssituation oder die sich ständig ändernden Betriebssituationen erfolgt.

Der Vollständigkeit halber sei hier noch erwähnt, dass im Steuertrieb ein im Wesentlichen synchroner Antrieb (Lauf) der einzelnen Komponenten erfolgt.

Darüber hinaus könnte der Elektromotor (elektrische Maschine) über ein schaltbares Getriebe angebunden sein. Somit würde die elektrische Maschine in unterschiedlichen Drehzahlen zum Steuertrieb betrieben werden können. Als Beispiel sei hier der Kaltstart bei sehr niedrigen Temperaturen erwähnt.

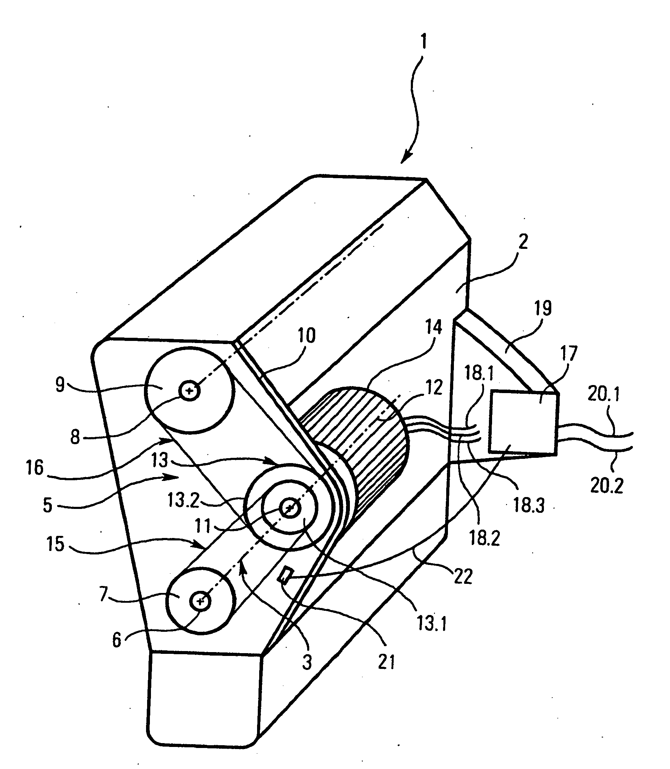

Im Folgenden wird die vorliegende Erfindung anhand einer Zeichnung näher erläutert. Die Zeichnung zeigt:

Eine schematische perspektivische Darstellung eines Verbrennungsmotors mit Steuerkettentrieb.

Die Erfindung ist selbstverständlich nicht auf die Verwendung eines Steuerkettentriebes beschränkt, sondern als Getriebe können auch Riemen- und Zahnradgetriebe sowie Mischformen sämtlicher Getriebe einschließlich Kettentriebe zur Anwendung kommen.

Der in der Figur dargestellte Verbrennungsmotor 1 weist einen Motorblock 2 auf, in dem im unteren Bereich gestrichelt eine Kurbelwelle 3 und im oberen Bereich gestrichelt eine Nockenwelle 4 angedeutet sind. Die Frontseite des Verbrennungsmotors 1 ist offen dargestellt, so dass der Blick auf den Steuerkettentrieb 5 freigegeben ist. Der Steuerkettentrieb 5 ist entweder in einem Schacht am Motorblock 2 angeordnet oder von einem Deckel (nicht dargestellt) verschlossen. Ein Wellenstummel 6 der Kurbelwelle 3 ist frontseitig aus dem Motorblock 2 herausgeführt und auf diesem ein Kurbelwellenkettenrad 7 verdrehfest angeordnet. Ebenso ist ein Wellenstummel 8 der Nockenwelle 4 aus dem Motorblock 2 frontseitig herausgeführt und auf diesem ein Nockenwellenkettenrad 9 verdrehfest angeordnet.

Des Weiteren weist der Motorblock 2 einen vorspringenden Wandabschnitt 10 auf, durch den ein Wellenstummel 11 einer Zwischenwelle 12 hindurch gesteckt ist und auf dem ein Zwischenwellenkettenrad 13 verdrehfest angeordnet ist. Das Zwischenwellenkettenrad 13 weist einen ersten Zahnkranzbereich 13.1 und einen zweiten Zahnkranzbereich 13.2 auf. Die Zwischenwelle 12 ist identisch mit einer Rotorwelle eines an den Wandabschnitt 10 angeflanschten Elektromotors 14. Der Elektromotor 14 ist seitlich neben dem Motorblock angeordnet.

Der erste und zweite Zahnkranz 13.1 und 13.2 des Zwischenwellenkettenrads 13 sind verdrehfest zueinander angeordnet, wobei der erste Zahnkranz 13.1 mittels einer ersten Steuerkette 15 mit dem Kurbelwellenkettenrad verbunden ist und der zweite Zahnkranz 13.2 mittels einer zweiten Steuerkette 16 mit dem Nockenwellenkettenrad 9 verbunden ist. Durch die Verwendung einer Zwischenwelle 12 und des Zwischenwellenkettenrades 13 mit einem ersten und zweiten Zahnkranz 13.1 und 13.2 kann eine Übersetzung erzielt werden, die zu einer günstigeren Kettenradgröße sämtlicher Kettenräder führt. Darüber hinaus kann die Teilung der verwendeten ersten Steuerkette 15 und die Teilung der zweiten Steuerkette 16 unterschiedlich sein, wodurch sich eine Schwingungsreduzierung erreichen lässt. Als Steuerketten können sowohl Hülsen-Rollenketten als auch Zahnketten zur Anwendung kommen.

Der Wandabschnitt 10 ist als Bestandteil eines Schachts des Steuerkettentriebs 5 ausgestaltet oder ebenfalls von einem Frontdeckel mit abgedeckt, so dass sich ein geschlossener, ölgeschmierter Raum für den Steuerkettentrieb 5 ergibt.

Der Elektromotor 12 ist mit einer Steuer- und Regelungseinrichtung 17 mittels der Leitungen 18.1 -18.3 verbunden. Auch die Stromversorgung kann hierüber erfolgen. Die Steuer- und Regelungseinrichtung 17 ist an einem weiteren Wandabschnitt 19 am Motorblock 2 angebracht und mittels der Leitungen 20.1 und 20.2 mit einer Bordelektronik eines Kraftfahrzeuges verbunden. Des Weiteren ist im Bereich des Steuerkettentriebes 5 ein Sensor 21 angeordnet, der mittels der Leitung 22 mit der Steuer- und Regelungseinrichtung 17 in Verbindung steht. Der Sensor 21 ist so angeordnet, dass er die Schwingung des ersten Steuerkette 15 als einen Betriebsparameter misst. Weitere Sensoren zur Erfassung der unterschiedlichsten Betriebsparameter (einschließlich Drehzahl, Motorkennfeld etc.) können vorgesehen sein und ihre Daten und Signale an die Steuer- und Regelungseinrichtung 17 weiterleiten. Die Steuer- und Regelungseinrichtung 17 ist dann in der Lage in Abhängigkeit der Betriebsparameter bzw. der Betriebssituation den Elektromotor 14 anzusteuern bzw. geregelt anzusteuern.

Im Folgenden wird die Wirkungs- und Funktionsweise des oben beschriebenen Ausführungsbeispiels näher erläutert.

Der Elektromotor 14 ist mittels des Zwischenwellenkettenrades 13 derart in den Steuerkettentrieb 5 integriert, dass dieser gesteuert oder geregelt ein Drehmoment und/oder ein Drehmomentprofil in den Steuerkettentrieb 5 einbringen oder abgreifen kann. Diese Drehmomenteinbringung oder -abgabe kann für verschiedene Funktionen verwendet werden. So können z.B. die im Steuerkettentrieb auftretenden Schwingungen durch gegengerichtete Schwingungsanregung reduziert und die Ausbildung von Resonanzen verhindert werden. Im dargestellten Ausführungsbeispiel nimmt hierzu der Sensor 21 die Schwingungsanregung der ersten Steuerkette 15 auf und meldet diese an die Steuer- und Regelungseinrichtung 17 weiter. Sobald sich die Schwingungen erhöhen, wird bewusst ein Drehmoment in den Steuerkettentrieb 5 mittels des Elektromotors 14 eingebracht oder abgeführt, so dass sich die Schwingungen wieder reduzieren. Durch diese Funktion lässt sich gegebenenfalls ein Downsizing der Steuertriebskomponenten, sowie eine Verbesserung des NVH-Verhaltens durchführen. Die Daten zur Regelung können auch über den Elektromotor 14 und über das Motorsteuergerät, oder andere bereits vorhandene Sensoren, Kennfelder oder Steuergeräte, bereitgestellt werden.

Gemäß einer weiteren Variante kann der Elektromotor 14 als Starter ausgestaltet sein und den Verbrennungsmotor 1 starten. Nachdem der Elektromotor 14 noch andere Aufgaben übernimmt, ist sein ständiger Eingriff über das Zwischenkettenrad 13 in den Steuerkettentrieb 5 nicht nachteilig.

Des Weiteren kann der Elektromotor 14 im Generatorbetrieb laufen, so dass sich Energie in das Bordnetz einspeisen lässt oder Batterien und Speicher aufladen lassen. Eine solche Betriebssituation kann insbesondere beim Leerlauf oder bei einer Motorbremssituation des Verbrennungsmotors 1 auftreten.

Möglich ist auch eine Boostfunktion mittels einer Drehmomentunterstützung. Bei einer solchen Boostfunktion leitet der Elektromotor 14 über einen bestimmten Drehzahlbereich ein verstärkendes Drehmoment in den Steuerkettentrieb 4 ein, um z.B. ein Turboloch auszugleichen. Eine ähnliche Drehmomenteinbringung kann auch im Rahmen eines Abwürgschutzes erfolgen. Sämtliche der oben beschriebenen Funktionen können nur ausgeführt werden, wenn durch entsprechende Erfassung von Betriebsparametern oder Betriebssituationen des Verbrennungsmotors 1 der Elektromotor 14 angesteuert, bzw. geregelt werden kann.

Der Vollständigkeit halber sei erwähnt, dass die Zwischenwelle 12 auch zum Antreiben von Nebenaggregaten, z. B. einer Hochdruckpumpe, verwendet werden kann.

Vorrangig bei dieser Erfindung ist die Schwingungsreduzierung im Steuerkettentrieb 5. Gleichzeitig lassen sich aber auch noch eine Reihe anderer Funktionen durch diese Anordnung des Elektromotors 14 realisieren. Die Anbindung des Elektromotors 14 sollte derart erfolgen, dass dieser mit seinem Stator im ölfreien Bereich angeordnet ist, während der Wellenstummel 11 der Zwischenwelle 12 in den Ölraum des Steuerkettentriebs 5 eingreift. Der Elektromotor 14 kann auch in ölhaltiger Umgebung betrieben werden. In diesem Zusammenhang kann das Öl auch als Kühlmedium verwendet werden.

Es können auch Steuerkettentriebe mit zwei Nockenwellen oder Steuerkettentriebe ohne Zwischenwelle mit mehreren Zwischenwellen verwendet werden.

Der Betriebspunkt des Motors und die daraus resultierende Regelstrategie kann eventuell auch aus dem Motorsteuergerät, z.B. mittels eines LAN-BUS ausgelesen werden.

## Patentansprüche

1. Steuertrieb (5) für einen Verbrennungsmotor (1), mit einer Kurbelwelle (3), mindestens einer Nockenwelle (4), einem mit der Kurbelwelle (3) verbundenen Abtriebsrad (7), mindestens einem, die zugehörige Nockenwelle (4) antreibenden Antriebsrad (9) und einem das Abtriebsrad (7) und das mindestens eine Antriebsrad (9) miteinander verbindenden Getriebe, **dadurch gekennzeichnet, dass** ein Elektromotor (14) vorgesehen ist, der versetzt von der Kurbelwelle (3) und der mindestens einen Nockenwelle (4) sowie versetzt zu dem zugehörigen Abtriebsrad (9) und dem zugehörigen mindestens einen Antriebesrad (7) mittels eines Zwischenrades mit dem Getriebe in Eingriff steht und dass eine Steuereinrichtung (17) vorgesehen ist, wobei der Elektromotor (14) von der Steuereinrichtung (17) derart ansteuerbar ist, dass auf der Basis mindest eines Betriebsparameters und/oder mindestens einer Betriebssituation des Getriebes ein zusätzliches Drehmoment und/oder Drehmomentprofil in das Getriebe einbringbar und/oder vom Getriebe abgreifbar ist.

2. Steuertrieb (5) nach Anspruch 1, **dadurch gekennzeichnet, dass** eine Erfassungs- und/oder Auswerteeinrichtung vorgesehen ist, mittels der der mindestens eine Betriebsparameter und/oder die mindestens eine Betriebssituation des Getriebes erfassbar und/oder auswertbar ist, wobei als ein Betriebsparameter der Schwingungszustand des Getriebes und/oder als eine Betriebssituation die Schwingungssituation des Getriebes erfasst und/oder ausgewertet ist oder sind.

3. Steuertrieb (5) nach Anspruch 1 oder 2, **dadurch gekennzeichnet, dass** das Getriebe mindestens eine Steuerkette (15,16) umfasst.

4. Steuertrieb (5) nach Anspruch 1 oder 2, **dadurch gekennzeichnet, dass** das Zwischenrad mit mindestens einer Steuerkette (15,16) im Eingriff steht.

5. Steuertrieb (5) nach Anspruch 1, **dadurch gekennzeichnet, dass** eine Zwischenwelle (12) vorgesehen ist, die mittels einer ersten Steuerkette (15) mit der Kurbelwelle (3) und mittels einer zweiten Steuerkette (16) mit der mindestens einen Nockenwelle (4) wirkverbunden ist, wobei der Elektromotor (14) unmittelbar mit der Zwischenwelle (12) in Eingriff steht.

6. Steuertrieb (5), nach Anspruch 2, **dadurch gekennzeichnet, dass** die Zwischenwelle (12) als eine Rotorwelle des Elektromotors (14) ausgebildet ist oder koaxial mit dieser verbunden ist.

7. Steuertrieb (5) nach Anspruch 1 oder 2, **dadurch gekennzeichnet, dass** die Steuereinrichtung (17) als Regeleinrichtung ausgestaltet ist und der Elektromotor (14) von der Regeleinrichtung derart regelbar ist, dass mittels des Elektromotors (14) ein zusätzliches Drehmoment und/oder Drehmomentprofil geregelt in das Getriebe einbringbar und/oder vom Getriebe abgreifbar ist.

8. Steuertrieb (5) nach Anspruch 4, **dadurch gekennzeichnet, dass** die Regeleinrichtung mit einer Sensoreinrichtung (21) verbunden ist, mittels der mindestens ein von dem Betriebsparameter und/oder der Betriebssituation des Getriebes abhängiges Signal erfassbar ist und an die Regeleinrichtung weiterleitbar ist, wobei der Elektromotor mittels der Regeleinrichtung derart regelbar ist, dass mittels des Elektromotors (14) in Abhängigkeit des Betriebsparameters und/oder der Betriebssituation ein zusätzliches Drehmoment und/oder Drehmomentprofil in das Getriebe einbringbar und/oder vom Getriebe abgreifbar ist.

9. Steuertrieb (5) nach einem der Ansprüche 1 bis 8, **dadurch gekennzeichnet, dass** der Elektromotor (14) als Starter für den Verbrennungsmotor (1) ausgebildet ist.

10. Verfahren zum Betreiben eines Steuertriebs (5) an einem Verbrennungsmotor (1), bei dem ein Elektromotor (14) versetzt und separat von einer Kurbelwelle (3) und mindestens einer Nockenwelle (4) sowie versetzt zu dem zugehörigen Abtriebsrad und zugehörigen mindestens einem Antriebsrad in ein das Abtriebsrad und das mindestens eine Antriebsrad miteinander verbindende Getriebe integriert ist und mittels einer Steuereinrichtung (17) derart ansteuerbar ist, dass mittels des Elektromotors (14) ein zusätzliches Drehmoment und/oder Drehmomentprofil in das Getriebe einbringbar und/oder vom Getriebe abgreifbar ist, wobei das Verfahren folgende Schritte umfasst:
Erfassen mindestens eines Betriebsparameters und/oder einer Betriebssituation des Getriebes;
Ansteuern des Elektromotors (14) mittels der Steuereinrichtung (17), um ein zusätzliches Drehmoment und/oder Drehmomentprofil in Abhängigkeit des mindestens einen Betriebsparameters und/oder der Betriebssituation in das Getriebe (5) einzubringen und/oder vom Getriebe abzugreifen.

11. Verfahren nach Anspruch 10, **dadurch gekennzeichnet, dass** mindestens ein auf die im Getriebe auftretenden Schwingungen schließender Betriebsparameter und/oder als eine Betriebssituation die Schwingungssituation des Getriebes erfasst und/oder ausgewertet wird oder werden und die Steuereinrichtung (17) den Elektromotor (14) ansteuert, um ein zusätzliches Drehmoment und/oder Drehmomentprofil in Abhängigkeit des mindestens einen Betriebsparameters und/oder der Betriebssituation zur Schwingungsdämpfung in das Getriebe einzubringen und/oder vom Getriebe abzugreifen.

12. Verfahren nach Anspruch 10 oder 11, **dadurch gekennzeichnet, dass** der Elektromotor (14) mittels des Steuertriebs (5) den Verbrennungsmotor (1) startet.

13. Verfahren nach einem der Ansprüche 10 bis 12, **dadurch gekennzeichnet, dass** der Elektromotor (14) während vorbestimmter Betriebssituationen des Steuertriebs (5) im Generatorbetrieb betrieben wird und Energie abgibt

14. Verfahren nach Anspruch 13, **dadurch gekennzeichnet, dass** die vorbestimmte Betriebssituation eine auf den Steuertrieb (5) übertragene Leerlauf- oder Bremssituation des Verbrennungsmotors (1) ist.

15. Verfahren nach einem der Ansprüche 10 bis 14, **dadurch gekennzeichnet, dass** der Elektromotor (14) während vorbestimmter Betriebssituationen mittels des Steuertriebs (5) eine Drehmomentunterstützung des Verbrennungsmotors (1) bewirkt.

16. Verfahren nach Anspruch 15**, dadurch gekennzeichnet, dass** die vorbestimmte Betriebssituation ein auf das Getriebe des Steuertriebs (5) übertragenes Turboloch des Verbrennungsmotors (1) ist.

17. Verfahren nach Anspruch 15 oder 16, **dadurch gekennzeichnet, dass** die vorbestimmte Betriebssituation eine auf das Getriebe des Steuertriebs (5) übertragene Abwürgsituation des Verbrennungsmotors (1) ist.

18. Verfahren nach einem der Ansprüche 10 bis 17, **dadurch gekennzeichnet, dass** die Steuereinrichtung (17) als Regeleinrichtung ausgestaltet ist, um das zusätzliche Drehmoment und/oder Drehmomentprofil in Abhängigkeit des mindestens einen Betriebsparameters und/oder der Betriebssituation geregelt in das Getriebe einzubringen und/oder vom Getriebe abzugreifen.

## Claims

1. Timing drive (5) for an internal combustion engine (1), comprising a crankshaft (3), at least one camshaft (4), a driven gear (7) that is connected to the crankshaft (3), at least one driving gear (9) which drives the associated camshaft (4), and a transmission that interconnects the driven gear (7) and the at least one driving gear (9), **characterised in that** an electric motor (14) is provided which engages with the transmission in an offset manner relative to the crankshaft (3) and the at least one camshaft (4) as well as in an offset manner relative to the associated driven gear (7) and the associated at least one driving gear (9) by means of an intermediate gear, and that a control device (17) is provided, whereby the electric motor (14) can be triggered by the control device (17) in such a way that additional torque and / or an additional torque profile can be introduced into and /or tapped from the transmission based on at least one operational parameter and / or at least one operational situation of the transmission.

2. Timing drive (5) according to Claim 1, **characterised in that** a registering device and / or evaluation device is provided, by means of which the at least one operational parameter and / or the at least one operational situation of the transmission can be registered and / or evaluated, wherein the vibration state of the transmission is registered and / or evaluated as an operational parameter and / or the vibration situation of the transmission is registered and / or evaluated as an operational situation.

3. Timing drive (5) according to Claim 1 or 2, **characterised in that** the transmission comprises at least one timing chain (15, 16).

4. Timing drive (5) according to Claim 1 or 2, **characterised in that** the intermediate gear engages with at least one timing chain (15, 16).

5. Timing drive (5) according to Claim 1, **characterised in that** an intermediate shaft (12) is provided that is in an effective connection with the crankshaft (3) by means of a first timing chain (15) and with the at least one camshaft (4) by means of a second timing chain (16), wherein the electric motor (14) engages directly with the intermediate shaft (12).

6. Timing drive (5) according to Claim 2, **characterised in that** the intermediate shaft (12) is formed as a rotor shaft of the electric motor (14) or is coaxially connected to it.

7. Timing drive (5) according to Claim 1 or 2, **characterised in that** the control device (17) is developed as a regulating device and the electric motor (14) can be regulated by the regulating device in such a way that additional torque and / or an additional torque profile can be introduced into and / or tapped from the transmission in a regulated manner by the electric motor (14).

8. Timing drive (5) according to Claim 4, **characterised in that** the regulating device is connected to a sensor device (21), by means of which at least one signal that depends on the operational parameter and / or the operational situation of the transmission can be registered and passed on to the regulating device, wherein the electric motor can be regulated by means of the regulating device in such a way that additional torque and / or an additional torque profile can be introduced into and / or tapped from the transmission by means of the electric motor (14), depending on the operational parameter and / or the operational situation.

9. Timing drive (5) according to one of the Claims 1 to 8, **characterised in that** the electric motor (14) is formed as a starter motor for the internal combustion engine (1).

10. Method for operating a timing drive (5) on an internal combustion engine (1), in which an electric motor (14), in an offset and separate manner relative to the crankshaft (3) and at least one camshaft (4), as well as in an offset manner relative to the associated driven gear and the associated at least one driving gear, is integrated into a transmission that interconnects the driven gear and the at least one driving gear and can be triggered by means of a control device (17) in such a way that additional torque and / or an additional torque profile can be introduced into and / or tapped from the transmission by means of the electric motor (14), wherein the method comprises the following steps:
registering of at least one operational parameter and / or operational situation of the transmission,
triggering of the electric motor (14) by means of the control device (17), in order to introduce into and / or tap from the transmission (5) additional torque and / or an additional torque profile, depending on the at least one operational parameter and / or operational situation.

11. Method according to Claim 10, **characterised in that** at least one operational parameter that implies the vibrations that occur in the transmission and / or, as an operational situation, the vibration situation of the transmission is or are registered and / or evaluated and **in that** the control device (17) triggers the electric motor (14) in order to introduce into and / or tap from the transmission additional torque and / or a torque profile, depending on the at least one operational parameter and / or operational situation for vibration absorption.

12. Method according to Claim 10 or 11, **characterised in that** the electric motor (14) starts the internal combustion engine (1) by means of the timing drive (5).

13. Method according to one of the Claims 10 to 12, **characterised in that** the electric motor (14) is operated in generator mode during predetermined operational situations of the timing drive (5) and gives off energy.

14. Method according to Claim 13, **characterised in that** the predetermined operational situation is an idling or braking situation of the internal combustion engine (1), said situation being transferred to the timing drive (5).

15. Method according to one of the Claims 10 to 14, **characterised in that** the electric motor (14) effects torque support of the internal combustion engine (1) during predetermined operational situations by means of the timing drive (5).

16. Method according to Claim 15, **characterised in that** the predetermined operational situation is a turbo lag of the internal combustion engine (1), said turbo lag being transferred to the transmission of the timing drive (5).

17. Method according to Claim 15 or 16, **characterised in that** the predetermined operational situation is a stalling situation of the internal combustion engine (1), said stalling situation being transferred to the transmission of the timing drive (5).

18. Method according to one of the Claims 10 to 17, **characterised in that** the control device (17) is developed as a regulating device in order to introduce into and / or tap from the transmission, in a regulated manner, additional torque and / or an additional torque profile depending on the at least one operational parameter and / or operational situation.

## Revendications

1. Système de distribution (5) pour un moteur à combustion (1), comprenant un vilebrequin (3), au moins un arbre à cames (4), une roue menée (7) raccordée au vilebrequin (3), au moins une roue menante (9) entraînant l'arbre à cames correspondant (4), et une transmission raccordant conjointement la roue menée (7) et la au moins une roue menante (9), **caractérisé en ce qu'**il est prévu un moteur électrique (14) qui est en prise avec la transmission en décalage par rapport au vilebrequin (3) et par rapport au au moins un arbre à cames (4) ainsi qu'en décalage par rapport à la roue menée correspondante (9) et à la au moins une roue menante correspondante (7) au moyen d'une roue intermédiaire et **en ce qu'**il est prévu un dispositif de commande (17), dans lequel le moteur électrique (14) peut être commandé par le dispositif de commande (17) de manière à pouvoir engager dans la transmission un couple de torsion et/ou un profil de couple de torsion supplémentaire(s) et/ou à pouvoir le ou les désengager de la transmission sur la base d'au moins un paramètre de fonctionnement et/ou d'au moins une situation de fonctionnement de la transmission.

2. Système de distribution (5) selon la revendication 1, **caractérisé en ce qu'**il est prévu un dispositif d'acquisition et/ou d'exploitation à l'aide duquel le au moins un paramètre de fonctionnement et/ou la au moins une situation de fonctionnement de la transmission peut/peuvent être acquis et/ou exploités, dans lequel on acquiert et/ou on exploite, comme paramètre de fonctionnement, l'état oscillatoire de la transmission et/ou, comme situation de fonctionnement, la situation oscillatoire de la transmission.

3. Système de distribution (5) selon la revendication 1 ou 2, **caractérisé en ce que** la transmission comprend au moins une chaîne de distribution (15, 16).

4. Système de distribution (5) selon la revendication 1 ou 2, **caractérisé en ce que** la roue intermédiaire se trouve en prise avec au moins une chaîne de distribution (15,16).

5. Système de distribution (5) selon la revendication 1, **caractérisé en ce qu'**il est prévu un arbre intermédiaire (12) qui est raccordé activement au moyen d'une première chaîne de distribution au vilebrequin (3) et au moyen d'une deuxième chaîne de distribution (16) au au moins un arbre à cames (4), dans lequel le moteur électrique (14) est directement en prise avec l'arbre intermédiaire (12).

6. Système de distribution (5) selon la revendication 2, **caractérisé en ce que** l'arbre intermédiaire (12) se présente sous la forme d'un arbre de rotor du moteur électrique (14) ou est raccordé coaxialement à celui-ci.

7. Système de distribution (5) selon la revendication 1 ou 2, **caractérisé en ce que** le dispositif de commande (17) se présente sous la forme d'un dispositif de réglage et le moteur électrique (14) peut être réglé par le dispositif de réglage de manière à pouvoir, au moyen du moteur électrique (14), engager un couple de torsion et/ou un profil d'un couple de torsion supplémentaire(s) dans la transmission et/ou le ou les désengager de la transmission de manière réglée.

8. Système de distribution (5) selon la revendication 4, **caractérisé en ce que** le dispositif de réglage est raccordé à un dispositif de détection (21) à l'aide duquel on peut acquérir au moins un signal dépendant du paramètre de fonctionnement et/ou de la situation de fonctionnement de la transmission et le transmettre au dispositif de réglage, dans lequel le moteur électrique peut être réglé à l'aide du dispositif de réglage de manière à pouvoir engager dans la transmission un couple de torsion et/ou un profil de couple de torsion supplémentaire(s) et/ou le ou les désengager de la transmission à l'aide du moteur électrique (14) en fonction du paramètre de fonctionnement et/ou de la situation de fonctionnement.

9. Système de distribution (5) selon l'une quelconque des revendications 1 à 8, **caractérisé en ce que** le moteur électrique (14) se présente sous la forme d'un démarreur pour le moteur à combustion (1).

10. Procédé pour faire fonctionner un système de distribution (5) sur un moteur à combustion (1), dans lequel un moteur électrique (14) est intégré à une transmission raccordant l'une à l'autre la roue menée et la au moins une roue menante, en étant décalé et séparé d'un vilebrequin (3) et d'au moins un arbre à cames (4) ainsi qu'en étant décalé de la roue menée correspondante et de la au moins une roue menante correspondante et peut être commandé à l'aide d'un dispositif de commande (17) de manière à pouvoir engager dans la transmission un couple de torsion et/ou un profil de couple de torsion supplémentaire(s) et/ou le ou les désengager de la transmission à l'aide du moteur électrique (14), dans lequel le procédé comprend les étapes consistant à :
acquérir au moins un paramètre de fonctionnement et/ou une situation de fonctionnement de la transmission, et
commander le moteur électrique (14) à l'aide du dispositif de commande (17) pour engager dans la transmission (5) un couple de torsion et/ou un profil de couple de torsion supplémentaire(s) en fonction du au moins un paramètre de fonctionnement et/ou de la situation de fonctionnement et/ou le ou les désengager de la transmission.

11. Procédé selon la revendication 10, **caractérisé en ce que** l'on acquiert et/ou l'on exploite au moins un paramètre de fonctionnement qui met fin aux oscillations apparaissant dans la transmission et/ou, comme situation de fonctionnement, la situation d'oscillation de la transmission et le dispositif de commande (17) commande le moteur électrique (14) de manière à pouvoir engager dans la transmission un couple de torsion et/ou un profil de couple de torsion supplémentaire(s) en fonction du au moins un paramètre de fonctionnement et/ou de la situation de fonctionnement afin d'amortir les oscillations et/ou le ou les désengager de la transmission.

12. Procédé selon la revendication 10 ou 11, **caractérisé en ce que** le moteur électrique (14) démarre le moteur à combustion (1) à l'aide du système de distribution (5).

13. Procédé selon l'une quelconque des revendications 10 à 12, **caractérisé en ce que** le moteur électrique (14) est actionné au cours de situations de fonctionnement prédéterminées du système de distribution (5) lors du fonctionnement du générateur et délivre de l'énergie.

14. Procédé selon la revendication 13, **caractérisé en ce que** la situation de fonctionnement prédéterminée est une situation de ralenti ou de freinage du moteur à combustion (1) transmise au système de distribution (5).

15. Procédé selon l'une quelconque des revendications 10 à 14, **caractérisé en ce que** le moteur électrique (14) assure un appui au couple de torsion du moteur à combustion (1) au cours de situations de fonctionnement prédéterminées à l'aide du système de distribution (5).

16. Procédé selon la revendication 15, **caractérisé en ce que** la situation de fonctionnement prédéterminée est un turbotrou du moteur à combustion (1) transmis à la transmission du système de distribution (5).

17. Procédé selon la revendication 15 ou 16, **caractérisé en ce que** la situation de fonctionnement prédéterminée est une situation de calage du moteur à combustion (1) transmise à la transmission du système de distribution (5).

18. Procédé selon l'une quelconque des revendications 10 à 17, **caractérisé en ce que** le dispositif de commande (17) se présente sous la forme d'un dispositif de réglage pour pouvoir engager de manière réglée dans la transmission un couple de torsion et/ou un profil de couple de torsion supplémentaire(s) en fonction du au moins un paramètre de fonctionnement et/ou de la situation de fonctionnement et/ou le ou les désengager de la transmission.
